# EUROPÄISCHE PATENTSCHRIFT

(11) **EP 2 987 630 B1**
(45) Veröffentlichungstag und Bekanntmachung des Hinweises auf die Patenterteilung: **01.01.2020**
(21) Anmeldenummer: 15174715.1
(22) Anmeldetag: 01.07.2015
(51) Int. Cl.: B29D 30/06, B29C 33/38, B29C 33/10, B22F 3/105

(54) **VERFAHREN ZUR HERSTELLUNG EINER VULKANISIERFORM FÜR FAHRZEUGREIFEN UND VULKANISIERFORM FÜR FAHRZEUGREIFEN**
METHOD FOR PRODUCING A VULCANIZING MOULD FOR VEHICLE TYRES AND VULCANIZING MOULD FOR VEHICLE TYRES
PROCÉDÉ DE FABRICATION D'UN MOULE POUR LA VULCANISATION POUR PNEUS ET MOULE POUR LA VULCANISATION POUR PNEUS

(30) Priorität: 19.08.2014 DE 102014216455
(43) Veröffentlichungstag der Anmeldung: 24.02.2016
(73) Patentinhaber: Continental Reifen Deutschland GmbH, 30165 Hannover (DE)
(72) Erfinder: Ciptokusumo, Joharsyah, 30165 Hannover (DE); Hassellöf, Magnus, 30161 Hannover (DE); Drews, Marko, 30173 Hannover (DE)
(74) Vertreter: Finger, Karsten

(56) Entgegenhaltungen:
- EP-A1- 0 868 955
- EP-A1- 1 557 250
- EP-A1- 1 652 644
- DE-A1-102004 028 462
- DE-A1-102009 026 293
- DE-C1- 19 929 333
- FR-A1- 2 996 800
- US-A1- 2014 147 538

## Beschreibung

Die Erfindung betrifft ein Verfahren zur Herstellung einer Vulkanisierform für Fahrzeugreifen, wobei die Vulkanisierform mehrere, zu einer umfangsmäßig geschlossenen Form zusammenfahrbare Profilsegmente aufweist, wobei jedes Profilsegment radial innen eine Formfläche mit einem Negativ-Laufstreifenprofil mit Negativ-Profilelementen zur Formung des Positiv-Laufstreifenprofils mit Positiv-Profilelementen des zu vulkanisierenden Fahrzeugreifens aufweist, wobei man innerhalb der Negativ-Profilelemente schmale Entlüftungsspalte zur Ausleitung der Luft aus dem Formenhohlraum anordnet und wobei man die Formflächen samt der Entlüftungsspalte durch das Selective Laser Melting Verfahren herstellt.

Ein derartiges Verfahren ist beispielsweise aus der EP 1 652 644 A1 bekannt.

Ferner offenbart die EP 0 868 955 A1 ein Verfahren zur Herstellung einer Vulkanisierform für Fahrzeugreifen. Gemäß einer Variante sind von der Innenseite der Vulkanisierform ausgehende Entlüftungskanäle vorgesehen.

Die Reifenvulkanisation erfolgt in Heizpressen, bei der der Reifenrohling in geeignete Vulkanisierformen eingesetzt und unter Einwirkung von Wärme sowie Druck vulkanisiert wird. Vulkanisierformen für Reifen bestehen unter anderem aus Profilsegmenten, welche gemeinsam die radial äußere Oberfläche des Reifens, wie den Laufstreifen und den Schulterbereich formen, während weitere Segmente die weiteren Bereiche des Reifens formen. Der unvulkanisierte grüne Reifenrohling wird in der Vulkanisierform heizgepresst und durch Kautschukvernetzungsreaktionen in seinen endgültigen gummielastischen Zustand überführt. Dabei erhält der Reifen seine Profil- und Seitenwandgestaltung durch die entsprechende Negativgestaltung der Formflächen der Formsegmente.

Wichtig ist bei der Reifenvulkanisation, dass beim Zusammenfahren der Formsegmente die eingeschlossene Luft innerhalb des Formenhohlraumes nicht die Fertigungsqualität des Fahrzeugreifens beeinträchtigt, sondern zuverlässig abgeführt wird. Dabei sollen möglichst keine Austriebe entstehen, welche in einem weiteren Arbeitsschritt durch das sogenannte Trimmen entfernt werden müssten.

Die Formsegmente der Vulkanisierformen für Fahrzeugreifen sind aus Metall gefertigt, üblicherweise aus Stahl oder Aluminium.

Eine mittels eines Fräsverfahrens hergestellte Vulkanisierform ist in der bisher unveröffentlichten DE 10 2012 109 723 beschrieben. Bei der gefrästen Vulkanisierform sind die Formflächen der Formsegmente zumindest im mittigen Bereich des Negativ-Laufstreifenprofils puzzleartig aus Teil-Formsegmenten mit Teilung in Umfangsrichtung zusammengesetzt. Die Spalte von aneinander angrenzenden Teilformsegmenten sind als Entlüftungsspalte ausgestaltet, welche mit der Atmosphäre in Verbindung stehen. Eine derartige Vulkanisierform hat Vorteile in Bezug auf die Entlüftungsleistung. Die Summe der Spaltlängen ist gegenüber herkömmlichen kreisrunden Entlüftungsmitteln erhöht, wodurch die Entlüftung verbessert ist. Es kann mehr Luftvolumen pro Zeiteinheit abgeführt werden und Lufteinschlüsse, welche die Fertigungsqualität des Reifens mindern würden, sind zuverlässig vermieden.

Jedoch sind vorgenannte Vulkanisierformen im Fräsverfahren hergestellt. Das ist einerseits hinsichtlich der Herstellung teuer, andererseits ist die Reinigung einer gefrästen Form sehr aufwändig, da die einzelnen Teile der Form für die Reinigung auseinandergenommen werden und nach erfolgter Reinigung für den Gebrauch wieder zusammengesetzt werden müssen. Aufgrund dieser Nachteile werden gefräste Formen meist nicht für die Serienproduktion sondern nur für Versuchsreifen eingesetzt.

Der Erfindung liegt daher die Aufgabe zugrunde, ein kostengünstiges Verfahren zur Herstellung einer Vulkanisierform mit Entlüftungsspalten bereitzustellen, wobei die Vulkanisierform leicht zu reinigen und für die Serienproduktion von Fahrzeugreifen geeignet sein soll.

Gelöst wird die Aufgabe dadurch, dass man den Entlüftungsspalt mit einer Tiefe von 2 mm bis 15 mm und einer Breite von 50 µm bis 120 µm, vorzugsweise von 80 µm bis 100 µm, herstellt, wobei der Entlüftungspalt in radialer Richtung in einen Entlüftungskanal mündet.

Durch das generative Fertigungsverfahren der Gruppe der Strahlschmelzverfahren wird üblicherweise Metallpulver in einer dünnen Schicht auf eine Grundplatte aufgebracht. Das Metallpulver wird mittels Laserstrahlung lokal vollständig umgeschmolzen und bildet nach seiner Erstarrung eine feste Materialschicht. Die Entlüftungsschlitze werden gleichzeitig durch das Selektive Laserschmelzverfahren mit aufbaut. Die Formfläche eines jeden Profilsegmentes ist durchgängig durch das SLM-Verfahren hergestellt und somit zusammenhängend. Die Entlüftungsschlitze müssen nicht aufwändig nachträglich in die Formfläche eingebracht werden, sondern werden gleichzeitig während des schichtweisen Aufbaus der Formfläche mit aufgebaut. Auf klassische Entlüftungsmittel wie beispielsweise zylindrische Entlüftungsbohrungen oder verschließbare Ventile, welche leicht verschmutzen, ist verzichtet.

Die Breite des Entlüftungsschlitzes bemisst sich senkrecht zu seiner Längserstreckung. Die vorgenannte Breite gewährt eine ausreichende Entlüftung, jedoch wird das Eindringen von Kautschukmaterial des Reifens in den Entlüftungsschlitz vermieden, sodass am heizgepressten Reifen keine bzw. kaum Austriebe entstehen. Zudem verschmutzt oder verstopft der Entlüftungsschlitz nicht bzw. kaum.

Beträgt die Reinigungszeit inklusive Montagezeit bei gefrästen (Puzzleteil-)Formen für ein Formsegment ca. 2 Stunden, benötigt man für die Reinigung der gesamten erfindungsgemäßen Vulkanisierform nur noch 2 Stunden.

Vorteilhaft ist es, wenn man das gesamte Profilsegment durch das Selective Laser Melting Verfahren herstellt. Die Konstruktionsfreiheitsgrade sind erhöht, Kosten und Aufwand der Wartung sind gesenkt.

Alternativ stellt man nicht das gesamte Profilsegment, sondern nur den formflächenseitigen Bereich des Profilsegmentes mit dem Selective Laser Melting Verfahren her, vorzugsweise mit einer radial gemessenen Dicke von bis zu 20 mm. Es ist an Fertigungszeit gespart, die Formsegmente lassen sich leicht reparieren, indem der formflächenseitige Bereich, welcher mit dem Selective Laser Melting Verfahren hergestellt ist, erneuerbar ist.

Für eine zuverlässige Entlüftung ordnet man im mittigen Laufstreifenbereich, welcher umlaufende Negativ-Profilbänder aufweist, den oder die Entlüftungsspalte umlaufend im (innerhalb) Negativ-Profilelement an. Der mittige Laufstreifenbereich ist zwischen den beiden Schulterbereichen angeordnet.

Für eine zuverlässige Entlüftung ordnet man im Schulterbereich, welcher Negativ-Profilblöcke aufweist, den oder die Entlüftungsspalte quer zur Umfangsrichtung im Negativ-Profilblock an.

Zweckmäßig ist es, wenn man den Entlüftungsspalt mit einer Länge bis 20 mm herstellt, damit das erfindungsgemäße Entlüftungskonzept flexibel konstruiert werden kann. Der Entlüftungsschlitz kann dabei unterschiedliche Gestalt aufweisen.

Die Erfindung betrifft ebenfalls eine Vulkanisierform, welche nach dem vorgenannten Verfahren hergestellt ist.

Weitere Vorteile, Merkmale und Einzelheiten der Erfindung sind in den Figuren, welche Ausführungsbeispiele darstellen, näher erläutert. Es zeigen die:
- Fig. 1: eine segmentierte Vulkanisierform mit Formsegmenten;
- Fig. 2: einen Radialschnitt durch ein Profilsegment einer erfindungsgemäßen Vulkanisierform;
- Fig. 3: eine perspektivische Aufsicht auf die Formfläche eines Profilsegmentes;
- Fig. 4: einen Querschnitt eines Entlüftungsschlitzes entlang des Schnittes A-A der Fig. 3;
- Fig. 5: einen Längsschnitt des Entlüftungsschlitzes der Fig. 4 entlang des Schnittes B-B der Fig. 2;
- Fig. 6: einen Längsschnitt eines anderen Entlüftungsschlitzes samt Entlüftungskanal.

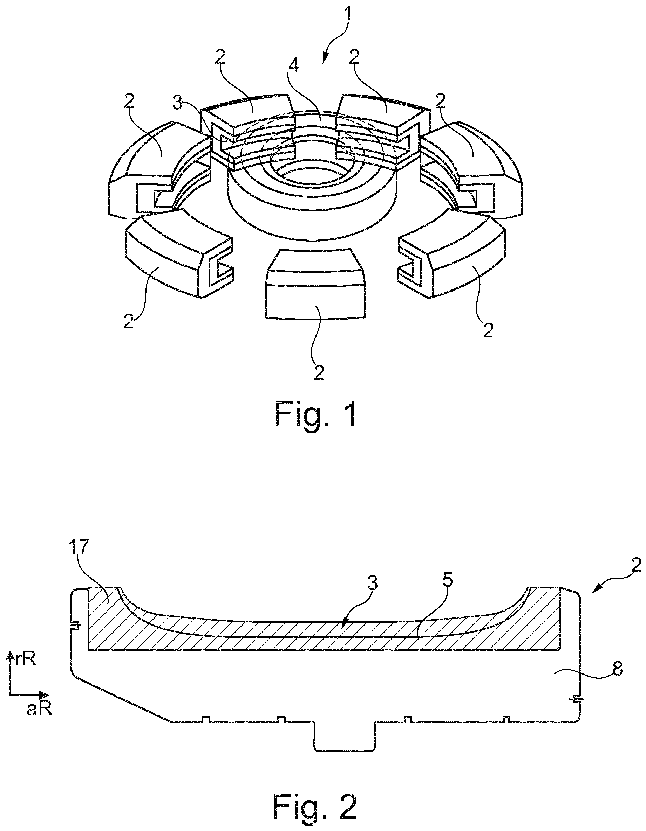

In der **Fig.1** ist eine vereinfachte schematische Darstellung einer segmentierten Vulkanisierform 1 für Fahrzeugreifen 4 mit mehreren, zu einer umfangsmäßig geschlossenen Form zusammenfügbaren Profilsegmenten 2 dargestellt. Die Profilsegmente 2 sind radial verfahrbar und bilden radial innen einen Formenhohlraum. Die Profilsegmente 2 weisen innenseitig Formflächen 3 auf. Die Profilsegmente 2 weisen weiterhin Entlüftungsmittel 5 (nicht dargestellt) auf, welche mit der Atmosphäre in Verbindung stehen und durch welche Gas aus dem Formenhohlraum der Vulkanisierform 1 durch das Formsegment 2 hindurch nach außen ausleitbar ist.

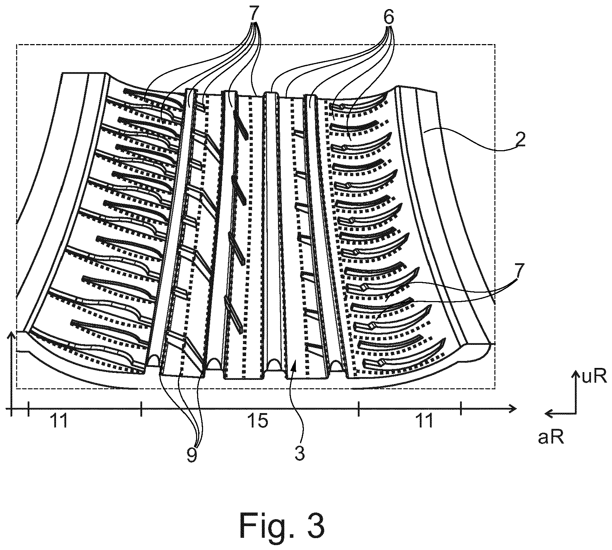

Die **Fig. 2** zeigt einen Radialschnitt durch ein Profilsegment 2 einer erfindungsgemäßen Vulkanisierform 1. Die Formfläche 3 weist ein Negativ-Laufstreifenprofil mit Negativ-Profilelementen (nicht dargestellt) zur Formung des Positiv-Laufstreifenprofils mit Positiv-Profilelementen des zu vulkanisierenden Fahrzeugreifens auf. Die Negativ-Laufstreifenoberfläche 5 ist durch eine durchgezogene Linie dargestellt. Innerhalb der Negativ-Profilelemente (nicht dargestellt) sind schmale Entlüftungsspalte (nicht dargestellt) zur Ausleitung der Luft aus dem Formenhohlraum angeordnet, vergl. Fig.3. Das Profilsegment 2 weist radial innen einen etwa U-förmigen Bereich 17 auf, welcher durch das Selective Laser Melting Verfahren hergestellt ist. Dieser Bereich 17 ist größer als die Formfläche 3 und ist kleiner als das Profilsegment 2. Dieser Bereich 17 umfasst die Formfläche 3 vollständig. Der Bereich 17 ist auf den gegossenen Profilsegmentgrundkörper 8 aufgebracht.

Die **Fig. 3** zeigt eine perspektivische Aufsicht auf die Formfläche 3 eines Formsegmentes 2. Die Formfläche 3 ist durch das Selective Laser Melting Verfahren hergestellt. Es sind elf Entlüftungsspalte 9 im mittigen Bereich 10 des Laufstreifennegativs in Umfangsrichtung (uR) angeordnet sind. Im Schulterbereich 11 der Formfläche 2 sind die Entlüftungsspalte 9 ebenfalls innerhalb der Negativ-Profilelemente 6, jedoch quer zur Umfangsrichtung (uR) angeordnet. Auf sonstige Entlüftungsmittel, wie beispielsweise Eurovents oder zylindrische Entlüftungsbohrungen, ist verzichtet. Die Entlüftungspalte 9 sind bevorzugt benachbart, hier mit einem Abstand von ca. 1 mm und parallel zu den Negativ-Rillen 7, welche Einschnitte im Profilpositiv des Reifens formen, angeordnet. Die Oberfläche der Entlüftungsspalte 9 in einem Negativ-Profilelement 6 beträgt etwa 5-15 % der Oberfläche des Negativ-Profilelementes 6.

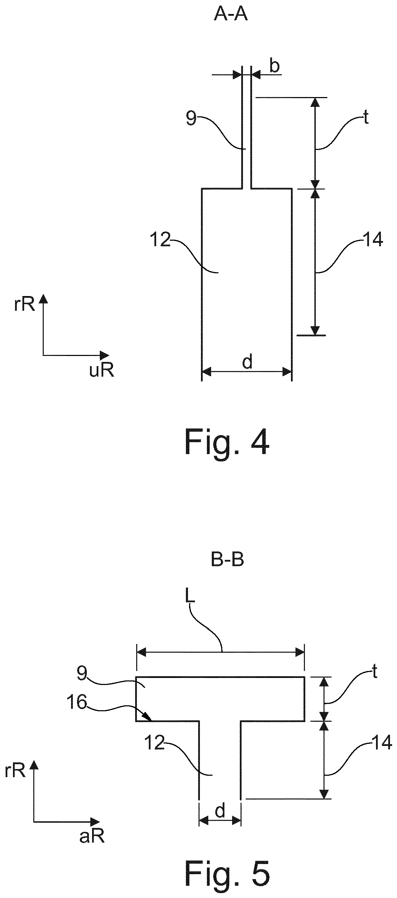

Die **Fig. 4** zeigt einen Querschnitt eines Entlüftungsspaltes 9 samt Entlüftungskanal 12 entlang des Schnittes A - A der Fig. 2, während die **Fig. 5** den nicht maßstabsgetreuen Längsschnitt entlang des Schnittes B - B zeigt. Der Entlüftungsspalt 9 weist eine Breite b von 50 µm bis 120 µm, vorzugsweise von 80 µm bis 100 µm auf. Der Entlüftungsspalt 9 mündet in den Entlüftungskanal 12, dessen Querschnittsfläche rund und größer als die Querschnittsfläche des Entlüftungsspaltes 9 ist. Der Durchmesser d des Entlüftungskanales 12 beträgt zwischen 2 mm und 3 mm.

Der Entlüftungsspalt 9 weist eine radiale Tiefenerstreckung t von 3 mm bis 5 mm und der Entlüftungskanal 12 weist eine radiale Tiefenerstreckung 14 von 10 mm bis 15 mm auf. Über die Längserstreckung des Entlüftungsspaltes und über seine Tiefenerstreckung 14 bleibt die Breite b gleich. Die Länge 1 des Entlüftungsspaltes beträgt zwischen 10 mm und 20 mm.

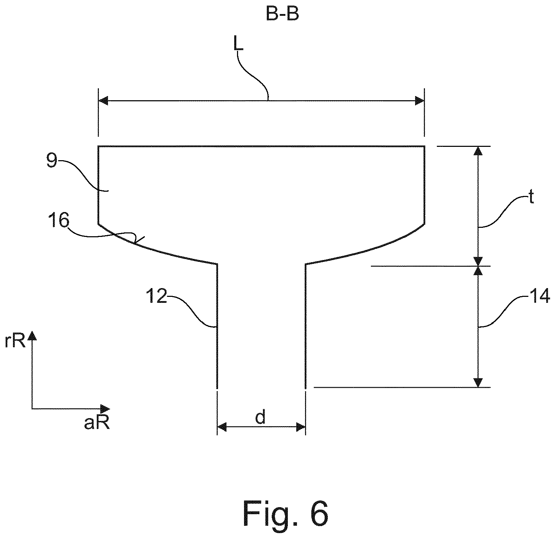

Die **Fig. 6** zeigt einen Längsschnitt eines anderen Entlüftungsspaltes 9 samt Entlüftungskanales 12. Der Längsschnitt dieses Entlüftungsmittels 5 unterscheidet sich von dem der Fig. 4 darin, dass die untere Fläche des Entlüftungsspalt 16 trichterförmig in den Entlüftungskanal 12 übergeht, während die untere Fläche des Entlüftungsspaltes 16 der Fig. 4 parallel zur axialen Richtung aR verlaufend als Gerade ausgebildet ist.

### Bezugszeichenliste

### (Teil der Beschreibung)

- 1: Vulkanisierform
- 2: Profilsegment
- 3: Formfläche
- 4: Fahrzeugreifen
- 6: Negativ-Profilelement
- 7: Negativ-Rille
- 8: Profilsegmentgrundkörper
- 9: Entlüftungsspalt
- 10: Mittiger Bereich des Laufstreifens
- 11: Schulterbereich des Laufstreifens
- 12: Entlüftungskanal
- 14: Tiefenerstreckung Entlüftungskanal
- 16: Untere Fläche des Entlüftungsschlitzes
- 17: Bereich, mit SLM Verfahren hergestellt

- b: Breite Entlüftungsspalt
- l: Länge Entlüftungsspalt
- t: Tiefe Entlüftungspalt
- d: Durchmesser Entlüftungskanal

- rR: radiale Richtung
- aR: axiale Richtung
- uR: Umfangsrichtung

## Patentansprüche

1. Verfahren zur Herstellung einer Vulkanisierform (1) für Fahrzeugreifen,
wobei die Vulkanisierform mehrere, zu einer umfangsmäßig geschlossenen Form zusammenfahrbare Profilsegmente (2) aufweist, wobei jedes Profilsegment (2) radial innen eine Formfläche (3) mit einem Negativ-Laufstreifenprofil mit Negativ-Profilelementen (6) zur Formung des Positiv-Laufstreifenprofils mit Positiv-Profilelementen des zu vulkanisierenden Fahrzeugreifens aufweist, wobei man innerhalb der Negativ-Profilelemente (3) schmale Entlüftungsspalte (9) zur Ausleitung der Luft aus dem Formenhohlraum anordnet und wobei man die Formflächen (3) samt der Entlüftungsspalte (9) durch das Selective Laser Melting Verfahren herstellt,
**dadurch gekennzeichnet,**
**dass** man den Entlüftungsspalt (9) mit einer Tiefe von 2 mm bis 15 mm und einer Breite von 50 µm bis 120 µm, vorzugsweise von 80 µm bis 100 µm, herstellt, wobei der Entlüftungspalt (9) in radialer Richtung in einen Entlüftungskanal (12) mündet.

2. Verfahren nach Anspruch 1,
**dadurch gekennzeichnet, dass** man das gesamte Profilsegment (2) durch das Selective Laser Melting Verfahren herstellt.

3. Verfahren nach Anspruch 1, **dadurch gekennzeichnet, dass** man nur den formflächenseitigen Bereich des Profilsegmentes (2) mit dem Selective Laser Melting Verfahren herstellt, vorzugsweise mit einer radial gemessenen Dicke von bis zu 20 mm.

4. Verfahren nach einem oder mehreren der vorangehenden Ansprüche, **dadurch gekennzeichnet, dass** man im mittigen Laufstreifenbereich (10), welcher umlaufende Negativ-Profilbänder (6) aufweist, den oder die Entlüftungsspalte (9) umlaufend im Negativ-Profilbändern (6) anordnet.

5. Verfahren nach einem oder mehreren der vorangehenden Ansprüche, **dadurch gekennzeichnet, dass** man im Schulterbereich (11), welcher Negativ-Profilblöcke (6) aufweist, den oder die Entlüftungsspalte (9) quer zur Umfangsrichtung im Negativ-Profilblock (6) anordnet.

6. Verfahren nach einem oder mehreren der vorangehenden Ansprüche, **dadurch gekennzeichnet, dass** man den Entlüftungsspalt (9) mit einer Länge (1) bis 20 mm herstellt.

7. Vulkanisierform (4), **dadurch gekennzeichnet, dass** diese nach einem Verfahren gemäß einem oder mehrerer der Ansprüche 1 - 6 hergestellt ist.

## Claims

1. Method for producing a vulcanizing mould (1) for vehicle tyres, wherein the vulcanizing mould has multiple profile segments (2) which can be moved together to form a circumferentially closed mould, wherein each profile segment (2) has radially inwards a mould surface (3) with a negative tread profile having negative profile elements (6) for forming the positive tread profile having positive profile elements of the vehicle tyre to be vulcanized, wherein narrow venting gaps (9) are arranged within the negative profile elements (3) for discharging the air out of the mould cavity and wherein the mould surfaces (3) together with the venting gaps (9) are produced by the selective laser melting method,
**characterized**
**in that** the venting gap (9) is produced with a depth of 2 mm to 15 mm and a width of 50 µm to 120 µm, preferably of 80 µm to 100 µm, wherein the venting gap (9) opens out in the radial direction into a venting channel (12).

2. Method according to Claim 1,
**characterized in that** the entire profile segment (2) is produced by the selective laser melting method.

3. Method according to Claim 1, **characterized in that** only the mould surface-side region of the profile segment (2) is produced by the selective laser melting method, preferably with a radially measured thickness of up to 20 mm.

4. Method according to one or more of the preceding claims, **characterized in that**, in the central tread region (10) having circumferential negative profile strips (6), the venting gap or gaps (9) is/are arranged in a circumferential manner in the negative profile strips (6).

5. Method according to one or more of the preceding claims, **characterized in that**, in the shoulder region (11) having negative profile blocks (6), the venting gap or gaps (9) is/are arranged transversely to the circumferential direction in the negative profile block (6).

6. Method according to one or more of the preceding claims, **characterized in that** the venting gap (9) is produced with a length (1) of up to 20 mm.

7. Vulcanizing mould (4), **characterized in that** it is produced by a method according to one or more of Claims 1-6.

## Revendications

1. Procédé de fabrication d'un moule de vulcanisation (1) pour pneus de véhicule,
le moule de vulcanisation comprenant plusieurs segments profilés (2) pouvant être rapprochés les uns des autres pour former un moule fermé sur la périphérie, chaque segment profilé (2) présentant, radialement à l'intérieur, une surface de moule (3) dotée d'un profil de bande de roulement négatif comprenant des éléments profilés négatifs (6) pour former le profil de bande de roulement positif comprenant des éléments profilés positifs du pneu de véhicule à vulcaniser, dans lequel on dispose des interstices de ventilation étroits (9) à l'intérieur des éléments profilés négatifs (3) pour évacuer l'air hors de la cavité de moule, et dans lequel les surfaces de moule (3), y compris les interstices de ventilation (9), sont produits par le procédé de fusion sélective par laser (Selective Laser Melting),
**caractérisé en ce**
**que** l'on produit l'interstice de ventilation (9) avec une profondeur de 2 mm à 15 mm et une largeur de 50 µm à 120 µm, de préférence de 80 µm à 100 µm, l'interstice de ventilation (9) débouchant dans un canal de ventilation (12) dans la direction radiale.

2. Procédé selon la revendication 1,
**caractérisé en ce que** l'on produit l'ensemble du segment profilé (2) par le procédé de fusion sélective par laser.

3. Procédé selon la revendication 1, **caractérisé en ce que** seulement la région du segment profilé (2) située du côté de la surface de moule est produite par le procédé de fusion sélective par laser, de préférence avec une épaisseur mesurée radialement inférieure ou égale à 20 mm.

4. Procédé selon l'une ou plusieurs des revendications précédentes, **caractérisé en ce que** le ou les interstices de ventilation (9) sont disposés de manière périphérique dans des bandes profilées négatives (6) dans la région de bande de roulement (10) centrale qui comprend des bandes profilées négatives (6) périphériques.

5. Procédé selon l'une ou plusieurs des revendications précédentes, **caractérisé en ce que** le ou les interstices de ventilation (9) sont disposés transversalement à la direction périphérique dans le bloc profilé négatif (6) dans la région d'épaulement (11) qui comprend des blocs profilés négatifs (6).

6. Procédé selon l'une ou plusieurs des revendications précédentes, **caractérisé en ce que** l'on produit l'interstice de ventilation (9) avec une longueur (1) inférieure ou égale à 20 mm.

7. Moule de vulcanisation (4), **caractérisé en ce que** celui-ci est fabriqué selon un procédé selon l'une ou plusieurs des revendications 1 à 6.
